# EUROPÄISCHE PATENTANMELDUNG

(11) **EP 4 465 518 A1**
(43) Veröffentlichungstag der Anmeldung: **20.11.2024**
(21) Anmeldenummer: 23174075.4
(22) Anmeldetag: 17.05.2023
(51) Int. Cl.: H02P 6/15, H02P 6/16

(54) **VERFAHREN ZUR ANSTEUERUNG EINES ELEKTROMOTORS SOWIE ELEKTRONISCHE STEUEREINRICHTUNG**

(71) Anmelder: Hilti Aktiengesellschaft, 9494 Schaan (LI)
(72) Erfinder: Engler, Torsten, 82211 Herrsching (DE); Batinica, Aleksandar, 8887 Mels (CH)
(74) Vertreter: Hilti Aktiengesellschaft Corporate Intellectual Property

(57) **Zusammenfassung**

Die Erfindung betrifft ein Verfahren zur Ansteuerung eines bürstenlosen Gleichstrommotors, bei dem die Messsignale mindestens zwei Magnetfeldsensoren (6a, 6b) zur sensorgesteuert Kommutierung eines Rotors (4) herangezogen werden, indem die Messignale durch eine elektronische Steuereinrichtung (5) zur Ermittlung die aktuelle Rotorposition signalverarbeitet werden, wobei die Signalverarbeitung eine Fehlerkompensation zur Eliminierung von eingemessenen Sektorlängenabweichungen durchführt, mit folgenden Schritten: Bereitstellen einer konstanten Rotor-Drehgeschwindigkeit während des eingeschalteten Betriebs des Gleichstrommotors; Ermittlung eines ersten und eines darauffolgend zweiten Sensorinterrupts (I₁ und I₂) und Speichern eines Messwertes für die sich hieraus ergebene dazwischenliegende Sektorlänge (L₁) eines zugeordneten ersten Winkelsektors (10a); Ermittlung der nachfolgenden Sensorinterrupts (I_{2...n}) und Speichern von Messwerten für die nachfolgenden Sektorlängen (L_{2...n}) der entsprechend nachfolgenden Winkelsektoren (10b - 10f); Vergleichen der für den ersten Winkelsektor (10a) ermittelten Sektorlänge (L₁) mit einer für denselben ersten Winkelsektor (10a) nach mindestens einer vollständigen Umdrehung (U) des Rotors (4) wiederholt ermittelten Sektorlänge (L₁'); Vergleichen der für die übrigen Winkelsektoren (10b - 10f) jeweils ermittelten Sektorlängen (L_{2...n}) mit den für denselben jeweiligen Winkelsektor (S_{2...n}) nach mindestens einer vollständigen Umdrehung (U) des Rotors (4) wiederholt ermittelten Sektorlänge (L_{2...n}'); Ermitteln der relativen Messdifferenzen bezüglich der mindestens einen Wiederholungsmessung für zumindest einen Teil der Sektorlängen (L_{1...n}) zur Fehlerkompensation der Messabweichungen.

## Beschreibung

Die vorliegende Erfindung betrifft ein Verfahren zur Ansteuerung eines Elektromotors, vorzugsweise eines bürstenlosen Gleichstrommotors, bei dem die Messsignale mindestens zwei Magnetfeldsensoren zur sensorgesteuert Kommutierung eines Rotors herangezogen werden, indem die Messsignale durch eine elektronische Steuereinrichtung zur Ermittlung der aktuellen Rotorposition signalverarbeitet werden, wobei die Signalverarbeitung eine Fehlerkompensation zur Eliminierung von eingemessenen Sektorlängenabweichungen durchführt. Außerdem betrifft die Erfindung auch eine elektronische Steuereinrichtung zur Durchführung eines solchen Steuerungsverfahrens sowie auch ein hierin implementierbares Softwareprogramm. Ferner ist die Erfindung in gegenständlicher Hinsicht auch auf einen bürstenlosen Gleichstrommotor, umfassend die vorstehend erwähnte elektronische Steuereinrichtung gerichtet.

Das Einsatzgebiet der Erfindung erstreckt sich vornehmlich auf bürstenlose Gleichstrommotoren, welche auch als BLDC-Motoren bezeichnet werden. Die Ansteuerung derartiger Motoren erfolgt üblicherweise mit Hilfe von Magnetfeldsensoren, speziell sogenannte Hall-Effekt-Sensoren, zur Bestimmung der aktuellen Rotorposition. Diese Magnetfeldsensoren fühlen das jeweilige magnetische Feld der auf dem Rotor angeordneten Magneten und erzeugen ein digitales Muster, welches die Rotorpositionen von vorzugsweise sechs möglichen Sektoren anzeigt. Fehler entstehen aufgrund der relativen mechanischen Positionen des Magnetfeldsensors und des Magneten, der Auflösung und Genauigkeit des Sensors, der Polbreite des Magneten und der physikalischen Beziehung zwischen demselben und dem Rotor. Aufgrund dieser messsystembedingten Fehlerquellen kann die von Magnetfeldsensoren gemessene Rotorposition nicht genau mit der realen Rotorposition übereinstimmen. Die aus diesen Messfehlern resultierenden Sektorlängenabweichungen der vorzugsweise sechs Sektoren des Rotors können zu nachteilhaft geringeren Drehmomenten des Motors führen.

Die auf Magnetfeldsensoren, insbesondere den so genannten Hall-Effekt-Sensoren, basierende Ansteuerung des Motors ist somit real fehlerbehaftet, da das ideale System zwar gewöhnlich einen 6-Winkel-Sektor mit jeweils 60 Grad Sektorwinkel besitzt, wohingegen in der Realität geringfügige Abweichungen hiervon zutage treten, welche beispielsweise Schaltzeitpunkte und Geschwindigkeitsmessungen beeinträchtigen.

Charakteristisch für die hier interessierenden bürstenlosen Gleichstrommotoren ist ihre Kommutierung, die bei einem dreiphasigen Motor gewöhnlich aus den vorstehend bereits erwähnten sechs Sektoren pro Drehfelddurchlauf - welcher einer Umdrehung des Rotors entspricht - besteht. Es ist jedoch auch möglich, dass eine elektrische Umdrehung auch nur ein ganzzahliger Bruchteil einer mechanischen Umdrehung entspricht. Entsprechend der über die Magnetfeldsensoren ermittelten aktuellen Rotorposition werden über geeignete Leistungstreiber von der elektronischen Steuereinrichtung die Wicklungen des Motors angesteuert, die im Rotor ein Drehmoment erzeugen. Ein Hauptvorteil einer sensorgesteuerten Kommutierung der hier interessierenden Art besteht darin, dass diese auch bei sehr geringen Drehzahlen funktioniert und sich daher für drehzahlvariable Antriebe im Handwerkzeugmaschinenbereich und dergleichen eignet.

### Stand der Technik

Aus der DE 10 2005 027 775 A1 geht ein gattungsgemäßes Verfahren zur Ansteuerung eines bürstenlosen Gleichstrommotors hervor, welches auf einer vorstehend erläuterten magnetfeldsensorgesteuerten, sektorbasierten Kommutierung beruht. Zur Bestimmung systembedingter vorstehend erläuterter Messfehler wird eine Rück-EMK-Wellenform während des Leerlaufs des Motors - also im nicht-erregten Zustand - gemessen. Zwischen einer ausgewählten BEMF-Wellenform und einem ausgewählten Messsignal wird eine Winkelverschiebung berechnet. Derartige Verschiebungen werden vorzugsweise für jede Phase einzeln berechnet. Die Verschiebungen können vorteilhafterweise in der Motorsteuerungseinheit gespeichert und dazu verwendet werden, die ausgegebenen Motorsteuerungssignale auf ein maximales Drehmoment einzustellen, also die auftretenden Messfehler zu kompensieren.

Die WO 2007/084911 A1 offenbart ein anderes Verfahren zur fehlerkorrigierten Bestimmung der aktuellen Rotorposition eines Gleichstrommotors. Hierfür ist ein Sensormodul mit mindestens zwei unter einem festgelegten relativen Winkelabstand zueinander angeordneten Magnetfeldsensoren vorgesehen, welches dahingehend konfiguriert ist, als Reaktion auf eine Variation des Magnetflusses entsprechend einer Drehung von mehreren ringförmig angeordneten Sektoren, hier so genannten Motorfeldpolmagnetdomänen, eines Rotors entsprechende Messsignale als Eingangssignale für ein Positionsmessungsmodul zu erzeugen. Das Positionsmessungsmodul wandelt die Messsignale in sinusförmige Referenzsignale um, wobei die sinusförmigen Referenzsignale mindestens einen Offsetskalenfaktor und einen Amplitudenskalenfaktor aufweisen. Hieraus wird ein Fehlerterm gebildet, um ein Positionsschätzsignal entsprechend einer ungefähren Messung der Rotorposition zu erzeugen. Zur Fehlerkorrektur wird im Nachgang im Sinne einer verfeinerten Messung der Rotorposition dieser Fehlerterm zur Kompensation berücksichtigt, wobei die Erzeugung der verfeinerten Messung der Rotorposition eine iterative Eliminierung von regressiven Differenzen zwischen mehreren Positionsschätzungen umfasst.

Des Weiteren offenbaren EP 0662265 B1 und EP 0822651 B1 die elektronische Kommutierung bürstenloser Elektromotoren ohne Positionssensor sowie die Verwendung des Null-Durchgangs der Gegen-EMK zur Ermittlung der Rotorlage.

Nach der EP 102489 A1 wird zur Kommutierung die reale Rotorwinkellage berechnet, wobei die Signale eines mit einem Hall-Element ausgebildeten Positionssensors gezählt und zur Berechnung der aktuelle elektrische Phasenwinkel ein Zeitgeber benutzt wird. Die Rotorwinkellage wird während einer Nichtleitungsphase aus der gemessenen Gegen-EMK bestimmt.

Nach der EP 0822649 B1 ist zur aus Gegen-EMK bestimmten Winkellage zudem ein Motormodell in EPROM gespeichert.

Nach der WO 9738484 A1 wird ein Verfahren bei einem Reluktanzmotor verwendet.

Beim Stand der Technik erfolgt die Messfehlerermittlung stets bei nicht-erregtem Motor. So wird beispielsweise der Motor beschleunigt bis zu einer vorgegebenen Geschwindigkeit, wonach die Energieversorgung abgeschaltet wird. Nachfolgend rotiert der Motor zunächst mit relativ konstanter Geschwindigkeit und das Sensorsignal wird währenddessen eingelesen, worauf basierend anschließend die Fehlerkompensation durchgeführt wird.

Es ist die Aufgabe der vorliegenden Erfindung ein Verfahren zur Ansteuerung eines bürstenlosen Gleichstrommotors dahingehend weiter zu verbessern, dass mit geringem signalverarbeitungstechnischen Aufwand eine wirksame Fehlerkompensation ermöglicht wird.

### Offenbarung der Erfindung

Die Erfindung wird ausgehend von einem Verfahren zur Ansteuerung eines insbesondere bürstenlosen Gleichstrommotors gemäß dem Oberbegriff von Anspruch 1 in Verbindung mit dessen kennzeichnenden Merkmalen gelöst. Eine dieses Steuerungsverfahren durchführende elektronische Steuereinrichtung ist Gegenstand von Anspruch 7. Ein das Verfahren verkörperndes Softwareprogramm oder Softwareprogrammprodukt ist Gegenstand von Anspruch 8 und ein die elektronische Steuereinrichtung beinhaltender bürstenloser Gleichstrommotor ist Gegenstand von Anspruch 9. Die jeweils rückbezogenen abhängigen Ansprüche geben vorteilhafte Weiterbildungen der verschiedenen nebengeordneten Aspekte an.

Die Erfindung schließt die verfahrenstechnische Lehre ein, dass zwecks Fehlerkompensation zur Eliminierung von eingemessenen Sektorlängen - oder Sektorwinkelabweichungen - die folgenden Schritte durchgeführt werden:
- Bereitstellen einer konstanten Rotor-Drehgeschwindigkeit während des eingeschalteten Betriebs des Gleichstrommotors,
- Ermittlung eines ersten und eines darauffolgend zweiten Sensorinterrupts und Speichern dieser Messwerte für die sich hieraus ergebende dazwischenliegende Sektorlänge eines zugeordneten ersten Winkelsektors,
- Ermittlung der nachfolgenden Sensorinterrupts und Speichern von Messwerten für die nachfolgenden Sektorlängen der entsprechend nachfolgenden Winkelsektoren,
- Vergleichen der für den ersten Winkelsektor ermittelten Sektorlänge mit einer für denselben ersten Winkelsektor nach mindestens einer vollständigen Umdrehung des Rotors wiederholt ermittelten Sektorlänge,
- Vergleichen der für die übrigen Winkelsektoren jeweils ermittelten Sektorlängen mit den für denselben Winkelsektor nach mindestens einer vollständigen Umdrehung des Rotors wiederholt ermittelten Sektorlängen, und
- Ermitteln der relativen Messdifferenzen bezüglich der mindestens einen Wiederholungsmessung für zumindest einen Teil der Sektorlängen zur Fehlerkompensation der Messabweichungen.

Mit anderen Worten besteht die erfindungsgemäße Lösung darin, den Messfehler quasi "on-the-fly" ohne Einschränkung der Motorerregung durch konstantes Monitoring des Motors mit konstanter Geschwindigkeit zu bestimmen. Ein dabei ermittelter erster Sensorinterrupt wird zur Bestimmung der ersten Sektorlänge gespeichert; für jeden weiteren Winkelsektor wird entsprechend fortgefahren. Beim vorzugsweise zwölften Sensorinterrupt, welcher zwei Umdrehungen des Rotors entspricht, wird die Sektorlänge mit den dafür geltenden früheren Messwerten verglichen. Dies gilt für alle übrigen Winkelsektoren entsprechend. Zwei elektrische Umdrehungen entsprechen dabei einer mechanischen Umdrehung.

Um die Qualität der Fehlerkompensation zu erhöhen, wird vorgeschlagen, vorzugsweise vier vollständige Umdrehungen in den Vergleich der hierbei wiederholt eingemessenen Sektorlängen einzubeziehen, um die relativen Messdifferenzen durch beispielsweise Mittelwertbildung zu bestimmen.

Ebenfalls vorzugsweise sollte die Ermittlung der relativen Messdifferenzen für alle eingemessenen Sektorlängen des Rotors durchgeführt werden, um eine optimale Fehlerkompensation mit der erfindungsgemäßen Lösung zu erzielen.

Falls die relative Messdifferenz mindestens einer Sektorlänge unterhalb eines vordefinierten Schwellwerts liegt, werden weitere Wiederholungsmessungen mit weiteren Umdrehungen des Rotors fortgesetzt. Anderenfalls wird das erfindungsgemäße Verfahren von Beginn an gestartet.

Gemäß einer die Erfindung weiter verbessernden Maßnahme wird vorgeschlagen, dass die angegebene Sektorlänge gemäß Spezifikation des Gleichstrommotors zur initialen Kommutierung eines Rotors genutzt wird. Dies bedeutet, dass zunächst die in der Motorspezifikation angegebene Sektorlänge bzw. Sektorwinkel zugrunde gelegt wird.

Die Geschwindigkeitsmessung basiert - wie vorstehend erörtert - gewöhnlich auf der Sektorgröße, welche mit 60 Grad bei insgesamt sechs Winkelsektoren als konstant angenommen wird. Es wird die Geschwindigkeit anhand kompletter Winkelsektoren gemessen, was voraussetzt, dass jeder Winkelsektor eine den besagten 60 Grad entsprechende Länge aufweist. In der Realität ist die eingemessene Länge jedoch unterschiedlich, was zu den eingangs erwähnten Messfehlern führt. Diese äußern sich beispielsweise in einem recht verrauschten Geschwindigkeitsmesssignal. Werden jedoch die normalerweise frei verfügbaren Sektorlängen der Motorspezifikationen genutzt, kann zunächst eine Ansteuerung mit diesen Parametern durchgeführt werden, welche anschließend mit den eingelesenen Messwerten samt Fehlerkorrektur abgeglichen werden. Diese Vorgehensweise reduziert das Rauschen im Geschwindigkeitssignal um ca. 50%.
Es ist zu beachten, dass die Ansteuerung des Motors bzw. die Kommutierung des Motors hierbei sektorbasiert oder feldorientiert erfolgen kann.

Gemäß einer weiteren die Erfindung verbessernden Maßnahme wird vorgeschlagen, dass ein steuerungstechnischer so genannte Prefire-Winkel ("prefire angle") auf Basis der eingemessenen und fehlerkorrigierten Sektorlängen unter Berücksichtigung des Durchmessers des Rotors bestimmt wird. Denn über die Sektorlänge und den sich aus dem Durchmesser ergebenden Radius lässt sich durch die bestehenden geometrischen Beziehungen der Sektorwinkel und durch Halbierung desselben der Prefire-Winkel bestimmen. Der Prefire-Winkel dient dazu, die Motorphasen zu betreiben, bevor das aktuelle Messereignis durch Ermittlung zusammenhängender Sensorinterrupts ermittelbar ist, um das Ansprechverhalten zu verbessern. Hierfür wird der Prefire-Winkel gewöhnlich auf die besagten 30 Grad, also den halben Sektorwinkel von 60 Grad gesetzt.

Der Zeitpunkt, an welchem die Kommutierung erfolgt, wird auf Basis der Motorgeschwindigkeit und dem gewünschten Prefire-Winkel berechnet. Beispielsweise wird der Zeitabstand des vorangegangenen Winkelsektors um den Prefire-Winkel skaliert. Dabei können folgenden Fehler entstehen: Zum einen kann der Zeitabstand des letzten Winkelsektors falsch sein, da dieser tatsächlich nicht die idealen 60 Grad aufweist und zum anderen kann auch der Zeitabstand des aktuellen Winkelsektors falsch sein, da dieser ebenfalls nicht die idealen 60 Grad aufweist. Da durch die erfindungsgemäße Lösung jedoch die exakte Sektorlänge für jeden Sektor bekannt ist, können beide nachteilhaften Effekte kompensiert werden. Dies führt zu einem präziseren Prefire-Winkel, was zu einem gleichmäßigeren Motorlauf und geringeren Stromspitzen führt.

### Detailbeschreibung anhand Zeichnung

Weitere die Erfindung verbessernde Maßnahmen werden gemeinsam mit der Beschreibung eines bevorzugten Ausführungsbeispiels der Erfindung anhand der Figuren näher dargestellt. Es zeigt:
- Fig. 1: eine schematische Seitenansicht eines bürstenlosen Gleichstrommotors mit Magnetfeldsensoren zur sensorgesteuert sektorbasierten Kommutierung,
- Fig. 2: eine schematische Frontansicht des Gleichstrommotors nach Fig. 1,
- Fig. 3: eine schematische Sektorwinkeldarstellung über zwei Umdrehungen, ideal und real,
- Fig. 4: eine schematische Winkelsektorendarstellung über zwei Umdrehungen zur Veranschaulichung einer exemplarischen Wiederholungsmessug,
- Fig. 5: eine schematische ideale Sektorwinkeldarstellung über zwei Umdrehungen zur Veranschaulichung des Aspekts Prefire-Winkel, und
- Fig. 6: eine gegenüberstellende Darstellung von Sektorwinkeln, ideal und real, zum Aspekt Prefire-Winkel.

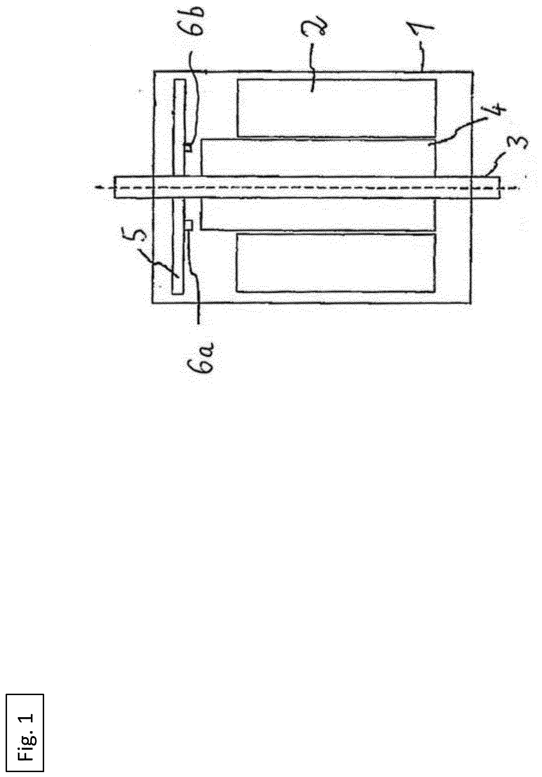

Gemäß Fig. 1 besteht ein exemplarischer bürstenloser Gleichstrommotor in an sich bekannter Weise im Wesentlichen aus einem in einem Motorgehäuse 1 angeordneten Stator 2 sowie einem demgegenüber um eine Motorwelle 3 drehenden Rotor 4.
Stirnseitig beinhaltet das Motorgehäuse 1 eine um die Motorwelle 3 herum angeordnete elektronische Steuereinrichtung 5, welche hier in Form einer elektronischen Platine ausgeführt ist und zwei in Richtung Rotor 4 ausgerichtete Magnetfeldsensoren 6a und 6b umfasst.

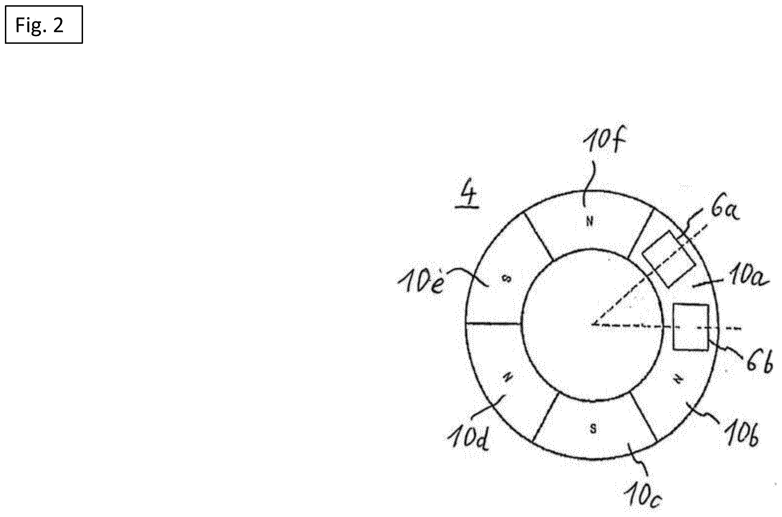

Gemäß Fig. 2 ist der Rotor 4 in insgesamt sechs Winkelsektoren 10a bis 10f aufgeteilt, welche jeweils 60 Grad betragen und einen Vollkreis ergeben. Relativ ortsfest hierzu sind die beiden Magnetfeldsensoren 6a und 6b zur sensorgesteuert sektorbasierten Kommutierung des Rotors 4 angeordnet.

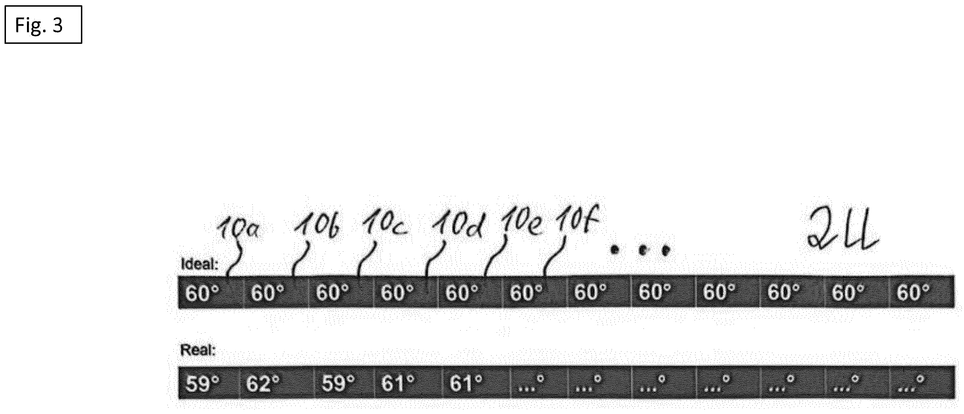

Nach Fig. 3 decken die einzelnen Winkelsektoren ideal gemäß des oberen Bandes einen gleichgroßen Sektorwinkel von 60 Grad ab. Illustriert ist diese Aufteilung hier anhand von zwei Umdrehungen 2U, welche die dargestellten zwei mal sechs Winkelsektoren 10a bis 10f umfassen. Real kommt es jedoch aufgrund des Messsystems zu anderen Messwerten, welche die hier interessierenden Sektorwinkelabweichungen bzw. Sektorlängenabweichungen erzeugen. Hier wird beispielsweise die im unteren Band illustrierte Abfolge von 59 Grad, 62 Grad, 59 Grad, 61 Grad, 61 Grad, usw. gemessen.

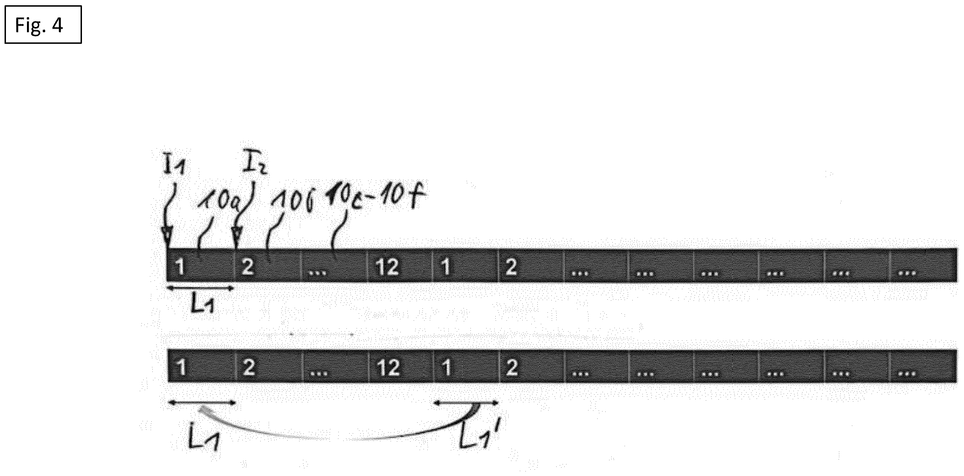

Um gemäß Fig. 4 diesen durch die Signalverarbeitung zutage tretenden Messfehler zu kompensieren, wird im Ausgangszustand eine konstante Rotor-Drehgeschwindigkeit im eingeschalteten Betrieb des Gleichstrommotors bereitgestellt. Anschließend erfolgt die Ermittlung eines ersten und eines darauffolgend zweiten Signalinterrupts I₁ und I₂ und ein Speichern eines Messwerts für die sich hieraus ergebende dazwischen liegende Sektorlänge L₁ eines zugeordneten ersten Winkelsektors 10a. Analog auf dieselbe Weise erfolgt nach Detektion der nachfolgenden Sensorinterrupts die Ermittlung der übrigen Sektorlängen der nachfolgenden Winkelsektoren gemäß Fig. 1.

Anschließend wird ein Vergleich der für den ersten Winkelsektor 10a ermittelten Sektorlänge L₁ mit einer für denselben ersten Winkelsektor 10a nach hier zwei vollständigen Umdrehungen des Rotors wiederholt ermittelten Sektorlänge L₁' durchgeführt. Analog dasselbe erfolgt mit den nachfolgenden Winkelsektoren.

Anschließend werden die relativen Messdifferenzen bezüglich der mindestens einen Wiederholungsmessung für die Sensorlängen 10a bis 10f zur Fehlerkompensation der Messabweichungen ermittelt.

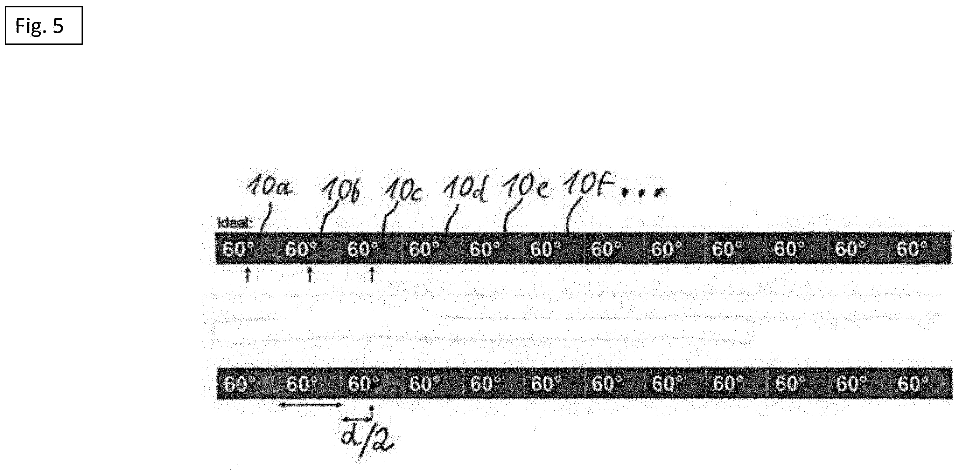

Gemäß Fig. 5 sind wie bereits vorstehend erläutert ideal gleichgroße Winkelsektoren 10a bis 10f von jeweils 60 Grad gegeben, woraus laut unterem Band ein idealer Prefire-Winkel α/2 von 30 Grad resultiert und gesetzt wird.

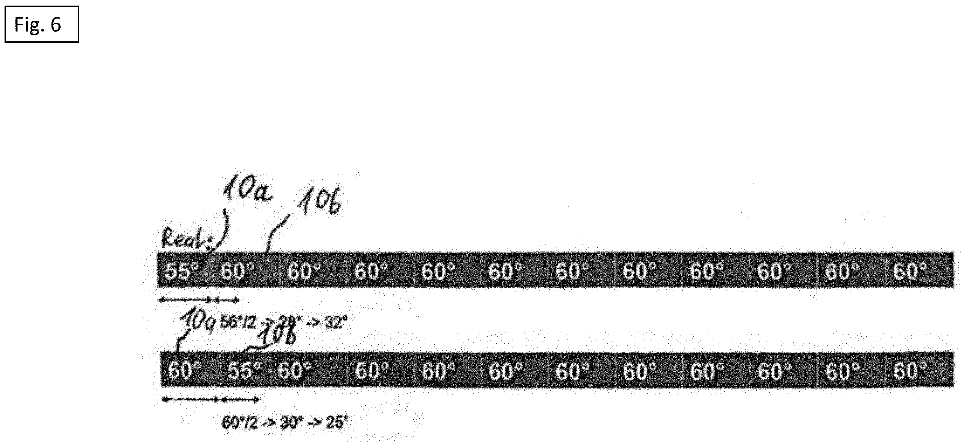

Gemäß Fig. 6 soll der Prefire-Winkel α/2 jedoch auf Basis der eingemessenen und fehlerkorrigierten Sensorlängen für jeden Winkelsektor 10a bis 10f bestimmt werden. Hierdurch kann bei einem vorhergehenden Sektorwinkel von 55 Grad für den Winkelsektor 10a und einem darauffolgenden Sektorwinkel von 60 Grad des Winkelsektors 10b der erforderliche Prefire-Winkel von 32 Grad eingestellt werden. Analog dasselbe gilt auch für die auf dieselbe Weise ermittelten 25 Grad im darunter liegenden Band.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, zur Fehlerkompensation relative Messdifferenzen, welche aus mehr als zwei vollständigen Umdrehungen des Rotors resultieren, in Betracht zu ziehen, um die Qualität der Messfehlerkorrektur zu erhöhen.

### Bezugszeichenliste

- 1: Motorgehäuse
- 2: Stator
- 3: Motorwelle
- 4: Rotor
- 5: elektronische Steuereinrichtung
- 6: Magnetfeldsensor (Hall-Sensor)

- 10a-10f: Winkelsektoren

- Iₙ: Sensorinterrupt
- Lₙ: Sektorlänge
- U: Umdrehung
- α/2: Prefire-Winkel

## Patentansprüche

1. Verfahren zur Ansteuerung eines bürstenlosen Gleichstrommotors, bei dem die Messsignale mindestens zwei Magnetfeldsensoren (6a, 6b) zur sensorgesteuert Kommutierung eines Rotors (4) herangezogen werden, indem die Messignale durch eine elektronische Steuereinrichtung (5) zur Ermittlung die aktuelle Rotorposition signalverarbeitet werden, wobei die Signalverarbeitung eine Fehlerkompensation zur Eliminierung von eingemessenen Sektorlängenabweichungen durchführt, **welche gekennzeichnet ist durch** die folgenden Schritte:
- Bereitstellen einer konstanten Rotor-Drehgeschwindigkeit während des eingeschalteten Betriebs des Gleichstrommotors,
- Ermittlung eines ersten und eines darauffolgend zweiten Sensorinterrupts (I₁ und I₂) und Speichern eines Messwertes für die sich hieraus ergebene dazwischenliegende Sektorlänge (L₁) eines zugeordneten ersten Winkelsektors (10a),
- Ermittlung der nachfolgenden Sensorinterrupts (I_{2...n}) und Speichern von Messwerten für die nachfolgenden Sektorlängen (L_{2...n}) der entsprechend nachfolgenden Winkelsektoren (10b - 10f),
- Vergleichen der für den ersten Winkelsektor (10a) ermittelten Sektorlänge (L₁) mit einer für denselben ersten Winkelsektor (10a) nach mindestens einer vollständigen Umdrehung (U) des Rotors (4) wiederholt ermittelten Sektorlänge (L₁'),
- Vergleichen der für die übrigen Winkelsektoren (10b - 10f) jeweils ermittelten Sektorlängen (L_{2...n}) mit den für denselben jeweiligen Winkelsektor (S_{2...n}) nach mindestens einer vollständigen Umdrehung (U) des Rotors (4) wiederholt ermittelten Sektorlänge (L_{2...n}'), und
- Ermitteln der relativen Messdifferenzen bezüglich der mindestens einen Wiederholungsmessung für zumindest einen Teil der Sektorlängen (L_{1...n}) zur Fehlerkompensation der Messabweichungen.

2. Verfahren nach Anspruch 1,
**dadurch gekennzeichnet, dass** der Vergleich der eingemessenen Sektorlängen (L_{1...n}) nach mindestens zwei vollständigen Umdrehungen (U), vorzugsweise nach vier vollständigen Umdrehungen (U) durchgeführt wird.

3. Verfahren nach Anspruch 1,
**dadurch gekennzeichnet, dass** die Ermittlung der relativen Messdifferenzen für alle eingemessenen Sektorlängen (L_{1...n}) des Rotors (1) durchgeführt wird.

4. Verfahren nach Anspruch 1,
**dadurch gekennzeichnet, dass** falls die relative Messdifferenz mindestens einer Sektorlänge (L_{1...n}) unterhalb eines vordefinierten Schwellwerts liegt, die Wiederholungsmessung mit weiteren Umdrehungen (U) fortgesetzt wird, anderenfalls von Beginn gestartet wird.

5. Verfahren nach Anspruch 1,
**dadurch gekennzeichnet, dass** die angegebene Sektorlänge (L) gemäß Spezifikation des Gleichstrommotors zur initialen sektorbasierten Kommutierung eines Rotors (4) genutzt wird.

6. Verfahren nach einem der vorstehenden Ansprüche,
**dadurch gekennzeichnet, dass** ein steuerungstechnischer Prefire-Winkel (α/2) auf Basis der eingemessenen und fehlerkorrigierten Sektorlänge (L_{1...n}) unter Berücksichtigung der Durchmessers des Rotors (4) bestimmt wird.

7. Elektronische Steuereinrichtung (5) zur Ansteuerung eines bürstenlosen Gleichstrommotors, die dafür eingerichtet ist, eine Signalverarbeitung der Messsignale von mindestens zwei Magnetfeldsensoren (6a, 6b) zur sensorgesteuert Kommutierung durchzuführen, wobei außerdem eine Fehlerkompensation zur Eliminierung von Sektorwinkelabweichungen nach einem der vorstehenden Ansprüche 1 bis 6 vorgesehen ist.

8. Softwareprogramm mit Programmcode zur Durchführung des Verfahrens nach einem der Ansprüche 1 bis 6 durch eine Steuereinrichtung (5) gemäß Anspruch 7.

9. Bürstenloser Gleichstrommotor, umfassend einen Stator (2) einen Rotor (4) und mindestens zwei Magnetfeldsensoren (6a, 6b) zur sensorgesteuert Kommutierung mit einer elektronischen Steuereinrichtung (5) nach Anspruch 7.

10. Bürstenloser Gleichstrommotor nach Anspruch 9, wobei dessen Rotor (4) in insgesamt sechs Winkelsektoren (10a bis 10f) von jeweils 60° aufgeteilt ist.
